(19) Europäisches Patentamt
European Patent Office
Office européen des brevets

(11) **EP 4 207 336 A1**

(12) **EUROPEAN PATENT APPLICATION**

(43) Date of publication:
**05.07.2023 Bulletin 2023/27**

(21) Application number: **22216473.3**

(22) Date of filing: **23.12.2022**

(51) International Patent Classification (IPC):
*H01M 4/04* (2006.01)    *H01M 4/133* (2010.01)
*H01M 4/134* (2010.01)    *H01M 4/36* (2006.01)
*H01M 4/38* (2006.01)    *H01M 4/525* (2010.01)
*H01M 4/583* (2010.01)    *H01M 4/66* (2006.01)
*H01M 10/052* (2010.01)    *H01M 10/0585* (2010.01)
*H01M 50/105* (2021.01)    *H01M 4/02* (2006.01)

(52) Cooperative Patent Classification (CPC):
**H01M 4/667; H01M 4/0404; H01M 4/133;**
**H01M 4/134; H01M 4/364; H01M 4/366;**
**H01M 4/386; H01M 4/525; H01M 4/583;**
**H01M 10/052;** H01M 10/0585; H01M 50/105;
H01M 2004/021; H01M 2004/027

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **30.12.2021 KR 20210192178**

(71) Applicant: **SK On Co., Ltd.**
**Seoul 03161 (KR)**

(72) Inventors:
• **HAN, Jun Hee**
**34124 Daejeon (KR)**
• **KIM, Moon Sung**
**Daejeon 34124 (KR)**
• **KIM, Hyo Mi**
**34124 Daejeon (KR)**

• **RYU, Sang Baek**
**34124 Daejeon (KR)**
• **PARK, Gwi Ok**
**34124 Daejeon (KR)**
• **YOOK, Seung Hyun**
**34124 Daejeon (KR)**
• **JANG, Hwan Ho**
**34124 Daejeon (KR)**
• **CHUNG, Da Bin**
**34124 Daejeon (KR)**
• **PARK, Da Hye**
**34124 Daejeon (KR)**
• **CHUNG, Ju Ho**
**34124 Daejeon (KR)**

(74) Representative: **Prüfer & Partner mbB**
**Patentanwälte · Rechtsanwälte**
**Sohnckestraße 12**
**81479 München (DE)**

(54) **ANODE FOR LITHIUM SECONDARY BATTERY AND LITHIUM SECONDARY BATTERY INCLUDING THE SAME**

(57)    An anode for a lithium secondary battery includes an anode current collector, a first anode active material layer formed on at least one surface of the anode current collector and including a silicon-based active material and a graphite-based active material, and a second anode active material layer formed on the first anode active material layer and including a porous structure as an active material. The porous structure includes carbon-based particles including pores, and a silicon-containing coating formed at an inside of the pores of the carbon-based particles or on the surface of the carbon-based particles.

FIG. 1

**Description**

BACKGROUND

1. Field

The present invention relates to an anode for a lithium secondary battery and a lithium secondary battery including the same.

2. Description of the Related Art

A secondary battery which can be charged and discharged repeatedly has been widely employed as a power source of a mobile electronic device such as a camcorder, a mobile phone, a laptop computer, etc., according to developments of information and display technologies. Recently, a battery pack including the secondary battery is being developed and applied as a power source of an eco-friendly vehicle such as an electric automobile.
The secondary battery includes, e.g., a lithium secondary battery, a nickel-cadmium battery, a nickel-hydrogen battery, etc. The lithium secondary battery is highlighted due to high operational voltage and energy density per unit weight, a high charging rate, a compact dimension, etc.
For example, the lithium secondary battery may include an electrode assembly including a cathode, an anode and a separation layer (separator), and an electrolyte immersing the electrode assembly. The lithium secondary battery may further include an outer case having, e.g., a pouch shape accommodating the electrode assembly and the electrolyte.
Recently, as an application range of the lithium secondary battery has been expanded, developments of a lithium secondary battery having higher capacity and power is being progressed. Particularly, silicon having a higher capacity and carbon can be used together as an anode active material.
However, a large difference of volume expansion ratios is generated between silicon and carbon, and cracks in the anode and exposure to the electrolyte may be caused by repeated charging and discharging.
Accordingly, an anode that maintains capacity properties while suppressing cracks at an inside the anode may be preferable. For example, Korean Registered Patent Publication No. 10-1591698 discloses an anode including an anode active material containing silicon oxide, which may not provide sufficient life-span and power properties.

SUMMARY

According to an aspect of the present invention, there is provided an anode for a lithium secondary battery having improved capacity and life-span properties.
According to an aspect of the present invention, there is provided a lithium secondary battery including an anode that has improved capacity and life-span properties.
An anode for a lithium secondary battery includes an anode current collector, a first anode active material layer formed on at least one surface of the anode current collector and including a silicon-based active material and a graphite-based active material, a second anode active material layer formed on the first anode active material layer and including a porous structure as an active material. The porous structure includes carbon-based particles including pores, and a silicon-containing coating formed at an inside of the pores of the carbon-based particles or on the surface of the carbon-based particles.
In some embodiments, the first anode active material layer may include a first lower anode active material layer in contact with the anode current collector and a first upper anode active material layer formed on the first lower anode active material layer.
In some embodiments, a content of the silicon-based active material included in the first lower anode active material layer may be in a range from 0.1 wt% to 35 wt% based on a total weight of the first lower anode active material layer. A content of the silicon-based active material included in the first upper anode active material layer may be in a range from 0.1 wt% to 35 wt% based on a total weight of the first upper anode active material layer.
In some embodiments, the graphite-based active material may include artificial graphite and natural graphite. An amount of natural graphite included in the first lower anode active material layer may be greater than or equal to an amount of artificial graphite included in the first lower anode active material layer. An amount of natural graphite included in the first upper anode active material layer may be less than an amount of artificial graphite included in the first upper anode active material layer.
In some embodiments, a weight ratio of natural graphite included in the first lower anode active material layer relative to artificial graphite included in the first lower anode active material layer may be in a range from 1 to 19.
In some embodiments, a weight ratio of natural graphite included in the first upper anode active material layer relative to artificial graphite included in the first upper anode active material layer may be in a range from 0.025 to 0.82.

In some embodiments, a thickness of the first lower anode active material layer may be greater than 30% and less than 70% of a total thickness of the first anode active material layer.

In some embodiments, the second anode active material layer may further include artificial graphite and natural graphite. An amount of natural graphite included in the second anode active material layer may be equal to or less than an amount content of artificial graphite included in the second anode active material layer.

In some embodiments, a weight ratio of natural graphite included in the second anode active material layer relative to artificial graphite included in the second anode active material layer may be in a range from 0.025 to 1.

In some embodiments, a content of the porous structure may be in a range from 0.1 wt% to 35 wt% based on a total weight of the second anode active material layer.

In some embodiments, a thickness of the second anode active material layer may be in a range from 0.5% to 50% of a total thickness of the first anode active material layer and the second anode active material layer.

In some embodiments, the carbon-based particles included in the porous structure include at least one selected from the group consisting of activated carbon, a carbon nanotube, a carbon nanowire, graphene, a carbon fiber, a carbon black, graphite, a porous carbon, a pyrolyzed material of cryogel, a pyrolyzed material of xerogel and a pyrolyzed material of aerogel.

In some embodiments, a size of the pores of the carbon-based particles may be 20 nm or less.

In some embodiments, silicon included in the silicon-containing coating may have an amorphous structure or a crystallite size of 7 nm or less measured by an XRD (X-ray diffraction) analysis.

In some embodiments, the crystallite size of silicon included in the silicon-containing coating is measured by

[Equation 1]

$$L = \frac{0.9\lambda}{\beta cos\theta}$$

Equation 1.

In Equation 1, L is a crystallite size (nm), $\lambda$ is an X-ray wavelength (nm), $\beta$ is a full width at half maximum (rad) of a peak of a (111) plane of silicon included in the silicon-containing coating, and $\theta$ is a diffraction angle (rad).

A lithium secondary battery includes the anode according the above-described embodiments, and a cathode facing the anode.

An anode for a lithium secondary battery of the present invention includes a first anode active material layer including a silicon-based active material and a graphite-based active material, and a second anode active material layer including a porous structure.

In some embodiments, the first anode active material layer may include a first lower anode active material layer having improved adhesion to an anode current collector and a first upper anode active material layer enhancing power properties of a lithium secondary battery. The above effect may be achieved by adjusting a ratio of natural graphite and artificial graphite.

The porous structure included in the second anode active material layer includes carbon-based particles including pores, and a silicon-containing coating formed at inside of the pores of the carbon-based particles or on surfaces of the carbon-based particles. Accordingly, cracks due to a difference of volume expansion ratios between carbon and silicon during charging and discharging of the secondary battery may be prevented.

Additionally, the second anode active material layer including the porous structure including the silicon-containing coating may be disposed so that capacity and energy density of the secondary battery may be improved while lowering a content of the silicon-based active material included in the first anode active material layer. Thus, a secondary battery having high capacity and high energy density may be implemented while reducing a volume expansion of the silicon-based active material of the first anode active material layer.

BRIEF DESCRIPTION OF THE DRAWINGS

FIGS. 1 and 2 are schematic cross-sectional views illustrating an anode for a lithium secondary battery in accordance with exemplary embodiments.

FIGS. 3 and 4 are a schematic plan view and a schematic cross-sectional view, respectively, illustrating a lithium secondary battery in accordance with exemplary embodiments.

DETAILED DESCRIPTION OF THE EMBODIMENTS

According to embodiments of the present invention, an anode for a lithium secondary battery including a plurality of anode active material layers is included. According to embodiments of the present invention, a lithium secondary battery including the anode for a lithium secondary battery is also provided.

Hereinafter, the present invention will be described in detail with reference to exemplary embodiments and the accompanying drawings. However, those skilled in the art will appreciate that such embodiments described with reference to the accompanying drawings are provided to further understand the spirit of the present invention and do not limit subject matters to be protected as disclosed in the detailed description and appended claims.

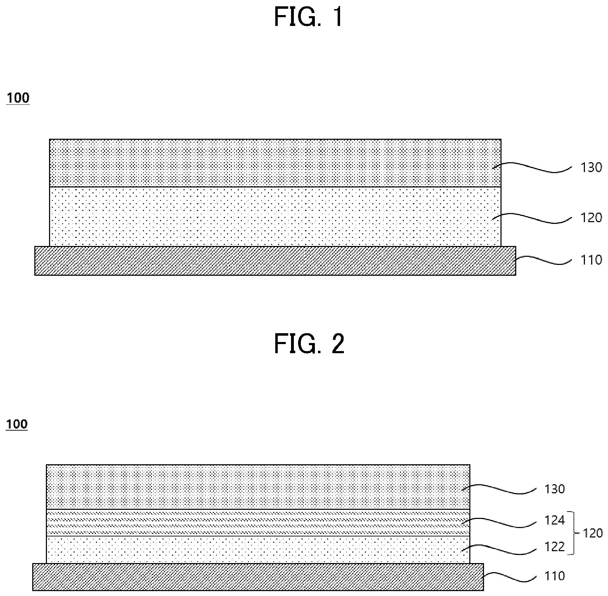

FIGS. 1 and 2 are schematic cross-sectional views illustrating an anode for a lithium secondary battery in accordance with exemplary embodiments.

Referring to FIG. 1, an anode 100 for a lithium secondary battery (hereinafter, may be abbreviated as "anode") includes an anode current collector 110, a first anode active material layer 120 and a second anode active material layer 130.

The anode current collector 110 may include, e.g., gold, stainless steel, nickel, aluminum, titanium, copper, or an alloy thereof, and preferably may include copper or a copper alloy.

The first anode active material layer 120 including a silicon-based active material and a graphite-based active material is formed on at least one surface of the anode current collector 110.

For example, the silicon-based active material may include at least one selected from the group consisting of Si, $SiO_x$ (0<x<2), a Si-Q alloy (where Q is an alkali metal, an alkaline earth metal, a group 13 element, a group 14 element, a group 15 element, a group 16 element, a transition metal, a rare earth element, or a combination thereof, but Si is excluded) and a Si-carbon composite. For example, the silicon-based active material may be a mixture of at least one selected from the group described above and $SiO_2$.

For example, the silicon-based active material may be Si or $SiO_x$ (0<x<2), preferably $SiO_x$ (0<x<2).

For example, the graphite-based active material may include artificial graphite and natural graphite.

For example, a first anode active material composition including the silicon-based active material and the graphite-based active material may be coated on the anode current collector 110, and then dried and pressed to form the first anode active material layer 120.

For example, the first anode active material composition may be prepared by mixing the silicon-based active material and the graphite-based active material in a solvent with an anode binder, a conductive material, and/or a dispersive agent.

The solvent may include an aqueous solvent such as water, an aqueous hydrochloric acid solution or an aqueous sodium hydroxide solution, or a non-aqueous solvent such as N-methyl-2-pyrrolidone (NMP), dimethylformamide, dimethylacetamide, N,N-dimethylaminopropylamine, ethylene oxide, tetrahydrofuran, etc.

For example, a polymer material such as styrene-butadiene rubber (SBR) may be used as the anode binder. Carboxymethyl cellulose (CMC) may be used as a thickener.

The conductive material may be included to promote an electron movement between active material particles. For example, the conductive material may include a carbon-based conductive material such as graphite, carbon black, graphene, carbon nanotube, etc., and/or a metal-based conductive material such as tin, tin oxide, titanium oxide, a perovskite material such as $LaSrCoO_3$, $LaSrMnO_3$, etc.

According to exemplary embodiments of the present invention, both the silicon-based active material and the graphite-based active material are used so that life-span properties may be improved while implementing high-capacity properties.

Referring to FIG. 2, the first anode active material layer 120 may include a first lower anode active material layer 122 contacting the anode current collector 110, and a first upper anode active material layer 124 formed on the first lower anode active material layer 122. In this case, an adhesion between the anode current collector 110 and the first anode active material layer 120, and rapid charge/discharge properties of the lithium secondary battery may be improved.

For example, the above-described silicon-based active material and graphite-based active material may be included in each of the first lower anode active material layer 122 and the first upper anode active material layer 124.

In some embodiments, an amount of the silicon-based active material included in the first lower anode active material layer 122 may be in a range from 0.1 weight percent (wt%) to 35 wt%, preferably from 6 wt% to 30 wt% based on a total weight of the first lower anode active material layer 122.

In some embodiments, an amount of the silicon-based active material included in the first upper anode active material layer 124 may be in a range from 0.1 wt% to 35 wt%, preferably from 6 wt% to 30 wt% based on a total weight of the first upper anode active material layer 124.

For example, within the above content of the silicon-based active material, a drastic increase of an increment of a volume expansion relative to an increment of a cell energy density may be prevented. Accordingly, life-span properties of the lithium secondary battery may be improved during repeated rapid charging and discharging.

In some embodiments, the graphite-based active material may include both artificial graphite and natural graphite.

If only artificial graphite is used as the anode active material, e.g., power properties may be improved, but an expansion of the silicon-based active material may not be sufficiently suppressed, thereby degrading the life-span properties of the lithium secondary battery. Further, an adhesive strength with the anode current collector may be deteriorated to cause a detachment of the anode active material layer during the charging and discharging.

If only natural graphite is used as the anode active material, e.g., the adhesion to the anode current collector may be improved, but a resistance may be increased during the rapid charging and discharging, thereby deteriorating the power properties.

According to exemplary embodiments of the present invention, the silicon-based active material, artificial graphite and natural graphite may be included in the first anode active material layer, so that the adhesion to the anode current collector 110 and the power properties of the lithium secondary battery may be improved.

In some embodiments, an amount of natural graphite included in the first lower anode active material layer 122 may be greater than or equal to an amount of artificial graphite included in the first lower anode active material layer 122. In this case, and adhesion between the first lower anode active material layer 122 and the anode current collector 110 may be increased. Accordingly, detachment of the anode current collector 110 and the first anode active material layer 120 due to the volume expansion of the silicon-based active material during charging and discharging may be prevented.

For example, a weight ratio of natural graphite relative to artificial graphite among the graphite-based active materials included in the first lower anode active material layer 122 may be in a range from 1 to 19, preferably from 1.5 to 3. Within this range, the adhesion between the anode current collector 110 and the first anode active material layer 120 may be sufficiently improved while preventing an excessive reduction of the content of artificial graphite. Thus, the power and life-span properties of the anode 100 may be improved or maintained while improving mechanical stability.

In some embodiments, an amount of natural graphite included in the first upper anode active material layer 124 may be less than an amount of artificial graphite included in the first upper anode active material layer 124. In this case, resistance during the rapid charging may be reduced, and power properties may be improved. Accordingly, high rate charge/discharge properties of the secondary battery may be improved.

For example, a weight ratio of natural graphite relative to artificial graphite among the graphite-based active materials included in the first upper anode active material layer 124 may be in a range from 0.025 to 0.82, preferably from 0.11 to 0.67. Within this range, an adhesive force at an interface between the first lower anode active material layer 122 and the first upper anode active material layer 124 may be maintained while sufficiently improving high rate charge/discharge properties. Accordingly, mechanical stability of the anode 100 may be maintained, a resistance at the interface may be reduced to improve the power properties.

In some embodiments, a thickness of the first lower anode active material layer 122 may be greater than 30% and less than 70% of a total thickness of the first anode active material layer 120, and may be preferably greater than 45% and less than 55%.

For example, as a thickness of the first upper anode active material layer 124 containing a relatively large amount of artificial graphite having a large particle hardness becomes increased, a relatively large load may be applied on the first anode active material layer containing a large amount of natural graphite having a relatively low particle hardness during an electrode pressing. In this case, a porosity may be reduced due to a deformation by a particle pressing.

If the thickness of the first lower anode active material layer 122 exceeds 30% of the total thickness of the first anode active material layer 120, the adhesive force between the anode current collector 110 and the first lower anode active material layer 122 may be sufficiently improved, and deterioration of a cell capacity and a cell life-span due to a resistance increase may be prevented. Additionally, the reduction of the porosity during the electrode pressing may be prevented to improve the power and life-span properties of the electrode.

If the thickness of the first lower anode active material layer 122 is less than 70% of the total thickness of the first anode active material layer 120, a proportion of natural graphite having a high expansion ratio during the charging and discharging may become lowered in the anode 100. Accordingly, the resistance increase and the reduction of the life-span properties due to an increase of the electrode thickness may be suppressed. Further, as the thickness of the first upper anode active material layer 124 becomes increased, the content of artificial graphite having improved power, high rate charge/discharge, and life-span properties may be increased so that the rapid charging and life-span properties of the secondary battery may be improved.

For example, a first lower anode active material composition including the silicon-based active material and the graphite-based active material may be coated directly on the anode current collector 110, and then dried and pressed to form the above-described first lower anode active material layer 122.

For example, the first lower anode active material composition may be prepared by mixing the silicon-based active material and the graphite-based active material in a solvent with an anode binder, a conductive material, and/or a dispersing material.

For example, a first upper anode active material composition including the silicon-based active material and the graphite-based active material may be directly coated on the first lower anode active material layer 122, and dried and pressed to form the above-described first upper anode active material layer 124.

For example, the first upper anode active material composition may be prepared by mixing the silicon-based active material and the graphite-based active material in a solvent with an anode binder, a conductive material, and/or a dispersing material.

The solvent, the anode binder, the conductive material and the dispersive agent substantially the same as those mentioned above may be used.

In an embodiment, the active material included in the first anode active material layer 120 may have a continuous concentration gradient at the interface between the first lower anode active material layer 122 and the first upper anode active material layer 124.

For example, the silicon-based active material and the graphite-based active material have a continuous concentration gradient at the interface. Further, the graphite-based active material may have a continuous concentration gradient at the interface between the first anode active material layer 120 and the second anode active material layer 130.

For example, the concentration gradient at the interface described above may be formed by sequentially coating the first lower anode active material composition, the first upper anode active material composition and a second anode active material composition on the anode current collector 110.

The second anode active material layer 130 including a porous structure is formed on the first anode active material layer 120.

The porous structure includes carbon-based particles including pores, and a silicon-containing coating formed at the inside of the pores of the carbon-based particles or on the surface of the carbon-based particles.

For example, the anode active material may be formed to include both silicon and carbon-based particles. Accordingly, carbon may partially alleviate the volume expansion of silicon. However, during charging and discharging of the lithium secondary battery, a difference between volume expansion ratios of silicon (e.g., about 400% or more) and carbon (e.g., about 150% or less) may be generated to result in cracks in the anode active material. Accordingly, the anode active material may be exposed to the electrolyte during repeated charging and discharging to cause side reactions such as gas generation, and the life-span properties of the lithium secondary battery may be deteriorated.

The carbon-based particles included in the porous structure include pores. For example, the carbon-based particles may be porous particles including a plurality of pores. Accordingly, the silicon-containing coating may be formed at the inside the pores and on the surface of the carbon-based particles. Therefore, during charging and discharging of the secondary battery, the difference in volume expansion ratios between carbon and silicon may be alleviated to prevent the generation of cracks.

For example, the second anode active material layer 130 may be provided as an outermost layer of the anode 100. Accordingly, side reactions between the electrolyte and silicon particles may be suppressed at an outermost region of the anode 100. Thus, the life-span properties of the secondary battery may be improved.

For example, the second anode active material layer 130 including the porous structure that may include the silicon-containing coating may be disposed so that the capacity and energy density of the lithium secondary battery may be improved while reducing the content of the silicon-based active material included in the first anode active material layer. Accordingly, the secondary battery having high capacity and high energy density may be implemented while suppressing the volume expansion of the silicon-based active material of the first anode active material layer 120.

In some embodiments, a pore size of the carbon-based particles may be 20 nm or less, preferably less than 10 nm. Within this range, excessive deposition of silicon in the pores may be prevented. Thus, the difference of the volume expansion ratios between carbon and silicon may be further alleviated during charging and discharging of the lithium secondary battery.

In some embodiments, the carbon-based particle may have a pore size in a range from 0.1 nm to 20 nm.

For example, the above-mentioned carbon-based particles may include an activated carbon, a carbon nanotube, a carbon nanowire, graphene, a carbon fiber, carbon black, graphite, a porous carbon, a material obtained by a thermal decomposition of cryogel, xerogel and/or aerogel, etc.

In some embodiments, the carbon-based particles described above may have an amorphous structure or a crystalline structure. Preferably, the carbon-based particles may have the amorphous structure. Durability of the porous structure may be increased, and the crack generation may be suppressed during the charging and discharging or an external impact by using the amorphous structure. Accordingly, the life-span properties of the lithium secondary battery may be improved.

In exemplary embodiments, the porous structure may include the silicon-containing coating formed at the inside of the pores of the carbon-based particle or on the surface of the carbon-based particle. The difference of the volume expansion ratios between carbon and silicon may be reduced while adopting the high capacity properties of silicon by using the silicon-containing coating. Thus, micro-cracks and electrolyte exposure during the repeated charging and discharging of the lithium secondary battery may be prevented, and the life-span properties of the lithium secondary battery may be improved while maintaining the power properties.

In exemplary embodiments, the above-described silicon-containing coating may have an amorphous structure or may contain silicon having a crystallite size of 7 nm or less measured by an X-ray diffraction (XRD) analysis. In a preferable embodiment, the crystallite size may be 4 nm or less. Within the above range, mechanical stability of the anode active material may be improved during the press process for manufacturing the lithium secondary battery or during the repeated charging and discharging. Accordingly, the capacity retention and the life-span properties the lithium secondary battery may be improved.

The term "amorphous structure" as used herein refers to a case that a shape of a single silicon included in the silicon-containing coating is amorphous or a case that a crystallite size is excessively small and may not be measured through a Scherrer equation represented by Equation 1 using the X-ray diffraction (XRD) analysis.

$$[\text{Equation 1}]$$
$$L = \frac{0.9\lambda}{\beta cos\theta}$$

In Equation 1 above, L represents the crystal grain size, $\lambda$ represents an X-ray wavelength, $\beta$ represents a full width at half maximum (FWHM) of a peak, and $\theta$ represents a diffraction angle. In exemplary embodiments, the FWHM in the XRD analysis for measuring the crystallite size may be measured from a peak of (111) plane of silicon contained in the silicon-containing coating.

In some embodiments, in Equation 1 above, $\beta$ may represent a FWHM obtained by correcting a value derived from an equipment. In an embodiment, Si may be used as a standard material for reflecting the equipment-derived value. In this case, the device-derived FWHM may be expressed as a function of $2\theta$ by fitting a FWHM profile in an entire $2\theta$ range of Si. Thereafter, a value obtained by subtracting and correcting the equipment-derived FWHM value at the corresponding $2\theta$ from the function may be used as $\beta$.

In some embodiments, the silicon-containing coating may further contain at least one of $SiO_x$ (0<x<2) and silicon carbide (SiC).

In some embodiments, the second anode active material layer 130 may further include artificial graphite and natural graphite.

For example, an amount of natural graphite included in the second anode active material layer 130 may be equal to or less than an amount of artificial graphite included in the second anode active material layer 130. Accordingly, a resistance during the rapid charging may be reduced and the power properties may be improved. Thus, high rate charge/discharge properties of the lithium secondary battery may be improved.

In some embodiments, a weight ratio of natural graphite included in the second anode active material layer 130 relative to artificial graphite included in the second anode active material layer 130 may be in a range from 0.025 to 1. Within the above range, the adhesive force may be maintained at the interface between the first upper anode active material layer 124 and the second anode active material layer 130 while sufficiently improving high rate charge/discharge properties. Accordingly, the resistance at the interface may be reduced to improve the power properties while maintaining mechanical stability of the anode 100.

In some embodiments, a content of the porous structure may be in a range from 0.1 wt% to 35 wt%, preferably from 6 wt% to 30 wt%, based on a total weight of the second anode active material layer 130. Within the above range, the volume expansion of silicon may be suppressed by the pores of the carbon-based particles, and an increment of the volume expansion relative to an increment of the energy density of the lithium secondary battery may be additionally suppressed. Thus, the life-span properties of the lithium secondary battery may be further improved during the repeated rapid charging and discharging.

In some embodiments, a thickness of the second anode active material layer 130 may be in a range from 0.5 % to 50 % of the total thickness of the first anode active material layer 120 and the second anode active material layer 130. Within this range, the porous structure may be sufficiently included in the second anode active material layer 130 to implement the anode 100 having high capacity and improved life-span properties. Additionally, a reduction of the energy density due to an excessive thickness of the anode 100 may be prevented. Therefore, the lithium secondary battery having high capacity and high energy density may be achieved.

For example, a second anode active material composition including the porous structure, artificial graphite and natural graphite may be coated on the first anode active material layer 120, and then dried and pressed to form the above-described second anode active material layer 130.

For example, the second anode active material composition may be prepared by mixing the porous structure, artificial graphite and natural graphite in a solvent with an anode binder, a conductive material and/or a dispersing material.

The solvent, the anode binder, the conductive material and the dispersive agent substantially the same as those mentioned above may be used.

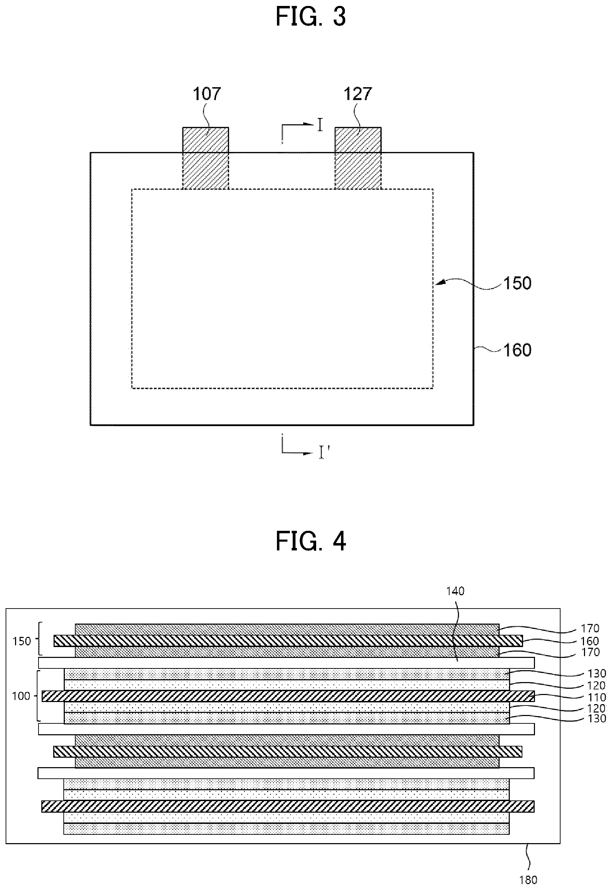

FIGS. 3 and 4 are a schematic plan view and a schematic cross-sectional view, respectively, illustrating a lithium secondary battery in accordance with exemplary embodiments.

Referring to FIGS. 3 and 4, the lithium secondary battery may include an electrode assembly 150 including the above-described anode 100 and a cathode 150 disposed to face the anode 100. The electrode assembly 150 may be accommodated and impregnated with the electrolyte in an outer case 180.

The cathode 150 may include a cathode active material layer 170 formed by coating a mixture containing the cathode active material on a cathode current collector 160.

For example, the cathode current collector 160 may include stainless steel, nickel, aluminum, titanium, or an alloy thereof.

For example, the cathode current collector 160 may include aluminum or stainless steel surface-treated with carbon, nickel, titanium and/or silver.

The cathode active material may include a compound capable of reversibly intercalating and de-intercalating lithium ions.

In exemplary embodiments, the cathode active material may include a lithium-transition metal oxide. For example, the lithium-transition metal oxide includes nickel (Ni) and may further include at least one of cobalt (Co) and manganese (Mn).

For example, the lithium-transition metal oxide may be represented by Chemical Formula 1 below.

$$[\text{Chemical Formula 1}] \qquad Li_xNi_{1-y}M_yO_{2+z}$$

In Chemical Formula 1, $0.9 \leq x \leq 1.2$, $0 \leq y \leq 0.7$, and $-0.1 \leq z \leq 0.1$. M may include at least one element selected from Na, Mg, Ca, Y, Ti, Hf, V, Nb, Ta, Cr, Mo, W, Mn, Co, Fe, Cu, Ag, Zn, B, Al, Ga, C, Si, Sn and Zr can be represented.

In some embodiments, a molar ratio or a concentration $(1-y)$ of Ni in Chemical Formula 1 may be greater than or equal to 0.8, and may exceed 0.8 in preferable embodiment.

A mixture may be prepared by mixing and stirring the cathode active material in a solvent with a cathode binder, a conductive material and/or a dispersive agent. The mixture may be coated on the cathode current collector 160, and then dried and pressed to form the cathode 150.

The solvent may include a non-aqueous solvent. For example, N-methyl-2-pyrrolidone (NMP), dimethylformamide, dimethylacetamide, N,N-dimethylaminopropylamine, ethylene oxide, tetrahydrofuran, etc., may be used.

The cathode binder may include an organic based binder such as a polyvinylidene fluoride-hexafluoropropylene copolymer (PVDF-co-HFP), polyvinylidenefluoride (PVDF), polyacrylonitrile, polymethylmethacrylate, etc., or an aqueous based binder such as styrene-butadiene rubber (SBR) that may be used with a thickener such as carboxymethyl cellulose (CMC).

For example, a PVDF-based binder may be used as a cathode binder. In this case, an amount of the binder for forming the cathode active material layer may be reduced, and an amount of the cathode active material may be relatively increased. Thus, capacity and power of the lithium secondary battery may be further improved.

The conductive material may include substantially the same compound as the conductive material used in the formation of the first anode active material layer 120 .

The anode 100 may be formed as described above.

A separation layer 140 may be interposed between the cathode 150 and the anode 100. The separation layer 140 may include a porous polymer film prepared from, e.g., a polyolefin-based polymer such as an ethylene homopolymer, a propylene homopolymer, an ethylene/butene copolymer, an ethylene/hexene copolymer, an ethylene/methacrylate copolymer, or the like. The separation layer 140 may be also formed from a non-woven fabric including a glass fiber with a high melting point, a polyethylene terephthalate fiber, or the like.

In some embodiments, an area and/or a volume of the anode 100 (e.g., a contact area with the separation layer 140) may be greater than that of the cathode 150. Thus, lithium ions generated from the cathode 150 may be easily transferred to the anode 100 without loss by, e.g., precipitation or sedimentation. Thus, the improvements of capacity and power according to the above-mentioned anode active material may be more easily implemented.

In exemplary embodiments, an electrode cell may be defined by the cathode 150, the anode 100 and the separation layer 140, and a plurality of the electrode cells may be stacked to form an electrode assembly 150 having, e.g., a jelly roll shape. For example, the electrode assembly 150 may be formed by winding, laminating or folding of the separation layer 140.

The electrode assembly 150 may be accommodated together with an electrolyte in the case 180 to define a lithium secondary battery. In exemplary embodiments, a non-aqueous electrolyte may be used as the electrolyte.

For example, the non-aqueous electrolyte solution may include a lithium salt and an organic solvent. The lithium salt and may be represented by $Li^+X^-$. An anion of the lithium salt $X^-$ may include, e.g., $F^-$, $Cl^-$, $Br^-$, $I^-$, $NO_3^-$, $N(CN)_2^-$, $BF_4^-$, $ClO_4^-$, $PF_6^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $CF_3CF_2SO_3^-$, $(CF_3SO_2)_2N^-$, $(FSO_2)_2N^-$; $CF_3CF_2(CF_3)_2CO^-$, $(CF_3SO_2)_2CH^-$; $(SF_5)_3C^-$, $(CF_3SO_2)_3C^-$, $CF_3(CF_2)_7SO_3^-$, $CF_3CO_2^-$, $CH_3CO_2^-$, $SCN^-$, $(CF_3CF_2SO_2)_2N^-$, etc.

The organic solvent may include, e.g., propylene carbonate (PC), ethylene carbonate (EC), diethyl carbonate (DEC), dimethyl carbonate (DMC), ethylmethyl carbonate (EMC), methylpropyl carbonate, dipropyl carbonate, dimethyl sulfoxide, acetonitrile, dimethoxy ethane, diethoxy ethane, vinylene carbonate, sulfolane, gamma-butyrolactone, propylene sulfite, tetrahydrofuran, etc. These may be used alone or in a combination thereof.

As illustrated in FIG. 3, electrode tabs (a cathode tab and an anode tab) may protrude from the cathode current collector 160 and the anode electrode current collector 110 included in each electrode cell to one side of the case 180. The electrode tabs may be welded together with the one side of the case 180 to form an electrode lead (a cathode lead 107 and an anode lead 127) extending or exposed to an outside of the case 180.

The lithium secondary battery may be manufactured in, e.g., a cylindrical shape using a can, a square shape, a pouch shape or a coin shape.

Hereinafter, preferred embodiments are proposed to more concretely describe the present invention. However, the following examples are only given for illustrating the present invention and those skilled in the related art will obviously understand that various alterations and modifications are possible within the scope and spirit of the present invention. Such alterations and modifications are duly included in the appended claims.

Example 1

(1) Formation of first anode active material layer

87.4 wt% of a graphite-based active material including artificial graphite (D50: 20 $\mu$m) and natural graphite (D50: 10 $\mu$m) mixed in a weight ratio of 5:5, 9.0 wt% of silicon oxide ($SiO_x$, 0<x<2, D50: 5 $\mu$m) (a silicon-based active material), 0.1 wt% of a SWCNT conductive material and 3.5 wt% of CMC/SBR (binder, 1.5/2.0 weight ratio) were mixed, and then water was added to prepare a first lower anode active material composition in the form of a slurry.

A first upper anode active material composition in the form of a slurry was prepared by the same method as that of the first anode slurry, except that a graphite-based active material in which artificial graphite and natural graphite was mixed in a weight ratio of 9:1 was used instead of the graphite-based active material. Silicon oxide was included as a silicon-based active material.

The first lower anode active material composition and the first upper anode active material composition prepared above were sequentially coated, dried and pressed on a surface of a copper current collector (8 $\mu$m-thick copper foil) to form a first lower anode active material layer and a first upper anode active material layer.

(2) Formation of second anode active material layer

1) Preparation of porous structure

Fabrication of carbon-based particles

i) Synthesis of resol oligomer: Phenol and formaldehyde were mixed in a molar ratio of 1:2, and 1.5 wt% of triethylamine was added, followed by a reaction at 85 °C, 4 h and 160 rpm (stirring).
ii) Suspension stabilization of resol oligomer: 1 g of PVA was dispersed in a water-dispersible medium, and added to the resol oligomer.
iii) Curing of resol Oligomer: 3g of HMTA as a curing agent was added and reacted at 98 °C for 12 h at 400 rpm (stirring).
iv) Obtaining carbon material: The cured resol oligomer was classified using a sieve, and then washed with $H_2O$.
v) Unreacted monomers and oligomers were removed from the washed resol oligomer using ethanol, and then dried.
vi) Carbonization and activation: The dried resol oligomer was calcined at 900 °C for 1 hour under a nitrogen atmosphere while a $CO_2$ gas was introduced at a flow rate of 1 L/min and carbonized at 900 °C.

Formation of silicone-containing coating

A silane gas was injected into a CVD coater at a flow rate of 50 to 100 mL/min, and maintained below 600 °C for about 120 to 240 minutes at a heating rate of 5 to 20 °C/min to form a porous structure containing silicon at an inside of pores and on surfaces of the carbon-based particles.

2) Formation of second anode active material layer

90.4 wt% of a graphite-based active material including artificial graphite and natural graphite mixed in a weight ratio of 5:5, 6.0 wt% of the porous structure as prepared above, 0.1 wt% of a SWCNT conductive material and 3.5 wt% of CMC/SBR (binder, 1.5/2.0 weight ratio) were mixed, and then water was added to prepare a second anode active material composition in the form of a slurry.

The prepared second anode active material composition was coated, dried and pressed on a top surface of the first upper anode active material layer to form a second anode active material layer.

(3) Fabrication of half cell

A coin cell (CR2032) was assembled by injecting an electrolyte into an electrode assembly including the anode, a counter electrode (lithium metal) and a PE separator interposed between the anode and the counter electrode. A half-cell was prepared by resting the assembled coin cell at room temperature for 3 to 24 hours. A solution of lithium salt 1.0M $LiPF_6$ in a mixed organic solvent (EC:FEC:EMC/DEC = 2:1:2:5 volume%) was used as the electrolyte.

(4) Fabrication of lithium secondary battery

$Li[Ni_{0.88}Co_{0.1}Mn_{0.02}]O_2$ as a cathode active material, carbon black as a conductive material and polyvinylidene fluoride (PVdF) as a binder were mixed in a weight ratio of 96.5:2:1.5 to from a slurry. The slurry was uniformly coated on an aluminum foil having a thickness of 12 $\mu$m, and vacuum dried to prepare a cathode for a secondary battery.

The cathode and the anode prepared as described above were each notched by a predetermined size, and stacked with a separator (polyethylene, thickness: 13$\mu$m) interposed therebetween to form an electrode cell. Each tab portion of the cathode and the anode was welded. The welded cathode/separator/anode assembly was inserted in a pouch, and three sides of the pouch except for an electrolyte injection side were sealed. The tab portions were also included in sealed portions.

An electrolyte was injected through the electrolyte injection side, and then the electrolyte injection side was also sealed. Subsequently, the above structure was impregnated for more than 12 hours.

A 1M $LiPF_6$ solution was prepared using a mixed solvent of EC/EMC/DEC (25/45/30; volume ratio), and 1 wt% of vinylene carbonate (VC), 0.5 wt% of 1,3-propensultone (PRS) and 0.5 wt% of lithium bis(oxalato)borate (LiBOB) were added to form the electrolyte.

Thereafter, a pre-charging was performed for 36 minutes with a current corresponding to 0.25C. Degassing was performed after 1 hour, and then aging for more than 24 hours and a formation charge/discharge were performed (charge condition CC-CV 0.2C 4.2V 0.05C CUT-OFF, discharge condition CC 0.2C 2.5V CUTOFF).

Thereafter, a standard charge and discharge was performed (charge condition CC-CV 0.5 C 4.2V 0.05C CUT-OFF, discharge condition CC 0.5C 2.5V CUT-OFF).

[Evaluation Example 11 Evaluation on volume expansion ratio, power property and rapid charge life-span property of anode

(1) Comparative Example 1

An anode and a lithium secondary battery were manufactured by the same method as that in Example 1, except that the second anode active material layer was not formed.

(2) Comparative Example 2

An anode and a lithium secondary battery were prepared in the same manner as in Example 1, except that the same amount of silicon oxide ($SiO_x$, 0 <x <2, D50: 5 $\mu$m) was added to the second anode active material layer instead of the porous structure. did

(3) Comparative Example 3

81.4 wt% of a graphite-based active material including artificial graphite and natural graphite mixed in a weight ratio of 5:5, 15.0 wt% of silicon oxide ($SiO_x$, 0<x<2, D50: 5 $\mu$m) (a silicon-based active material), 0.1 wt% of a SWCNT conductive material and 3.5 wt% of CMC/SBR (binder, 1.5/2.0 weight ratio) were mixed, and then water was added to prepare a first anode active material composition in the form of a slurry.

96.4 wt% of a graphite-based active material including artificial graphite and natural graphite mixed in a weight ratio of 5:5, 0.1 wt% of a SWCNT conductive material and 3.5 wt% of CMC/SBR (binder, 1.5/2.0 weight ratio) were mixed, and then water was added to prepare a second anode active material composition in the form of a slurry.

An anode and a lithium secondary battery were manufactured by the same method as that in Example 1 except for the above-mentioned preparations.

(4) Comparative Example 4

96.4 wt% of a graphite-based active material including artificial graphite and natural graphite mixed in a weight ratio of 5:5, 0.1 wt% of a SWCNT conductive material and 3.5 wt% of CMC/SBR (binder, 1.5/2.0 weight ratio) were mixed, and then water was added to prepare a first anode active material composition in the form of a slurry.

81.4 wt% of a graphite-based active material including artificial graphite and natural graphite mixed in a weight ratio of 5:5, 15.0 wt% of silicon oxide ($SiO_x$, 0<x<2, D50: 5 $\mu$m) (a silicon-based active material), 0.1 wt% of a SWCNT conductive material and 3.5 wt% of CMC/SBR (binder, 1.5/2.0 weight ratio) were mixed, and then water was added to prepare a second anode active material composition in the form of a slurry.

An anode and a lithium secondary battery were manufactured by the same method as that in Example 1 except for the above-mentioned preparations.

(5) Evaluation method

1) Evaluation on volume expansion ratio and detachment of anode

The anode and half-cells prepared in Example 1 and Comparative Examples 1 to 4 were charged (CC/CV 0.1C 0.01V (vs. Li) 0.01C CUT-OFF) at room temperature (25 °C), and the coin cells were disassembled..

A thicknesses (SOC0, t1) of the anode that were not charged and a thickness (SOC100, t2) of the charged anode were measured, and an expansion ratio of the anode was calculated by Equation 2 below. The calculated expansion coefficient is shown in Table 1 below.

$$[\text{Equation 2}]$$
$$\text{Expansion ratio (\%)} = (t2\text{-}t1)/(t1\text{-current collector thickness}) \times 100$$

In Equation 2, the current collector thickness is a thickness of the anode current collector used in the fabrication of the anode for the secondary battery.

Further, the charged anode was left at room temperature (25 °C) for 10 minutes without an additional washing process, and an adhesive surface between the anode current collector and the lower first anode active material layer was visually observed to evaluate a generation of detachment as follows.

∘: Detached region was observed.

×: Detachment was not observed.

2) Evaluation on power property

The lithium secondary batteries prepared in Example 1 and Comparative Examples 1 to 4 were charged (CC/CV 0.1C 0.01V (vs. Li) 0.01C CUT-OFF) and discharged (CC 0.1C 1.5V (vs. Li) CUT-OFF) at room temperature. A DCIR (m$\Omega$) and a power (W/kg) during the charging and discharging were measured.

The lithium secondary batteries prepared in Example 1 and Comparative Examples 1 to 4 were charged (CC / CV 0.3C 4.2V 0.05C CUT-OFF) and discharged (CC 0.3C 2.5V CUT-OFF) twice at room temperature (25 °C). Thereafter, the batteries were discharged (CC 0.3C) from the charged state (CC/CV 0.3C 4.2V 0.05C CUT-OFF) to an SOC50 point to measure a 10 seconds DCIR (m$\Omega$) and a power (W/ kg) at the SOC point.

3) Evaluation on rapid charge life-span property

The lithium secondary each of Examples and Comparative Examples was charged by C-rates of 2.0C/1.75C/1.5C/1.25C/1.0C/0.75C/0.5C C-rate to reach DOD72 within 25 minutes according to a stepwise charging method, and then discharged by 1/3C. The rapid charging evaluation was performed by repeating the charging and discharging cycle as one cycle. After repeating 100/200/300/400/500 cycles with an interphase of 10 minutes between the charge and discharge cycles, a rapid charge capacity retention was measured.

The evaluation results are shown in Table 1 and Table 2 below.

[Table 1]

| No. | volume expansion ratio (%) | detachment | discharge DCIR (mQ) | charge DCIR (mQ) | discharge power (W/kg) | charge power (W/kg) |
|---|---|---|---|---|---|---|
| Example 1 | 24.5 | X | 1.01 | 1.03 | 3145.81 | 2591.02 |
| Comparative Example 1 | 33.1 | X | 1.10 | 1.13 | 2989.21 | 2355.18 |
| Comparative Example 2 | 26.6 | X | 1.04 | 1.04 | 3106.11 | 2490.30 |
| Comparative Example 3 | 31.3 | X | 1.04 | 1.06 | 3116.05 | 2475.40 |
| Comparative Example 4 | 28.2 | O | 1.08 | 1.11 | 3008.18 | 2383.51 |

[Table 2]

| No. | discharge capacity retention according to rapid charge cycles (%) | | | | |
|---|---|---|---|---|---|
| | 100 cycles | 200 cycles | 300 cycles | 400 cycles | 500 cycles |
| Example 1 | 98.35 | 98.05 | 97.13 | 96.36 | 95.66 |
| Comparative Example 1 | 96.05 | 88.20 | - | - | - |
| Comparative Example 2 | 97.53 | 94.93 | 90.34 | 83.43 | 66.49 |
| Comparative Example 3 | 97.99 | 96.41 | 94.78 | 92.99 | 90.26 |
| Comparative Example 4 | 96.38 | 89.83 | - | - | - |

Referring to Tables 1 and 2, in the anode and the half-cell according to Example 1 including the porous structure in the second anode active material layer, the volume expansion was suppressed compared to those of Comparative Examples 1 to 4. Further, in the lithium secondary battery according to Example 1, resistance was reduced, and the power and capacity retention were improved compared to those from Comparative Examples 1 to 4.

In Example 1, even though silicon particles were included in the second anode active material layer that was an outermost layer of the anode, the volume expansion and side reactions with the electrolyte were suppressed by the porous structure. Accordingly, the power and life-span properties were remarkably improved compared to those of Comparative Examples in which the silicon-based active material was directly exposed to the electrolyte.

[Evaluation Example 21 Evaluation on adhesion, charging property based on rates, and rapid charging life-span property according to eight ratio of natural graphite to artificial graphite

(1) Examples 2 to 6

An anode and a lithium secondary battery were manufacture by the same method as that on Example 1, except that a weight ratio of natural graphite to a total weight of artificial graphite in the first lower anode active material layer, the first upper anode active material layer and the second anode active material layer was changed as shown in Table 3 below.

(2) Evaluation method

1) Evaluation of adhesion between the anode current collector and the anode active material layer

The anodes prepared in each of Examples 1 to 6 were cut into a 18 mm width and a 150 mm length, and an 18 mm width tape was attached to the foil layer of the anode, and then pressed with a roller having a load of 2 kg. The active material layer of the anode was attached to one side of a tensile tester using double-sided tape. The tape attached to the foil was coupled on an opposite side of the tensile tester and an adhesive force measurement was performed.

2) Evaluation of rapid charge life-span property

In the same method as that in (5)3) of Evaluation Example 1, the rapid charge life-span properties of the lithium secondary batteries according to Examples 1 to 6 after 100/200/300 cycles were evaluated.

3) Evaluation of charging property based on rates

The lithium secondary battery manufactured according to Examples 1 to 6 was charged (a first charge) (CC/CV 0.2C 4.2V 0.05C CUT-OFF) and discharged (CC 0.2C 2.5V CUT-OFF), and then charged (a second charge) (CC/CV xC 4.2V 0.05C CUT-OFF).

In the second charge, x is 0.2C, 0.333C, 0.5C, 0.7C, 1,0C, 12C, 1.5C, 1.7C, and 2.0C, and the second charge was performed in a chamber maintained at a constant temperature (25 °C).

A charge capacity at a constant current section for each charging rate relative to an initial 0.2C constant current charge capacity was measured.

The measurement results are shown in Table 3 and Table 4 below.

[Table 3]

| No. | weight ratio of natural graphite to artificial graphite | | | adhesive force (N) | rapid charge capacity retention according to cycles (%) | | |
|---|---|---|---|---|---|---|---|
| | first lower anode active material layer | first upper anode active material layer | second anode active material layer | | 100 cycles | 200 cycles | 300 cycles |
| Example 1 | 1 | 0.11 | 1 | 0.55 | 98.35 | 98.05 | 97.13 |
| Example 2 | 9 | 0.25 | 0.25 | 0.58 | 98.40 | 98.10 | 97.16 |
| Example 3 | 9 | 0.11 | 0.11 | 0.57 | 98.35 | 98.10 | 97.20 |
| Example 4 | 0.25 | 0.11 | 1 | 0.49 | 98.10 | 97.85 | 96.87 |
| Example 5 | 1 | 1 | 1 | 0.55 | 97.35 | 97.00 | 95.83 |
| Example 6 | 1 | 0.11 | 1.5 | 0.55 | 97.20 | 96.85 | 95.50 |

[Table 4]

| No. | capacity at constant current charging section | | | | | | | | |
|---|---|---|---|---|---|---|---|---|---|
| | 0.2C | 0.333C | 0.5C | 0.7C | 1.0C | 1.2C | 1.5C | 1.7C | 2.0C |
| Example 1 | 100.0 | 97.3 | 91.2 | 86.5 | 81.8 | 79.7 | 77.5 | 74.7 | 70.7 |
| Example 2 | 100.0 | 97.4 | 91.0 | 86.3 | 82.4 | 79.5 | 77.6 | 74.1 | 69.4 |
| Example 3 | 100.0 | 97.7 | 91.5 | 86.8 | 82.0 | 79.9 | 77.5 | 74.5 | 70.4 |
| Example 4 | 100.0 | 97.2 | 91.1 | 86.2 | 81.3 | 79.2 | 76.9 | 73.9 | 69.6 |
| Example 5 | 100.0 | 96.6 | 89.2 | 84.4 | 81.3 | 78.9 | 76.0 | 72.4 | 67.6 |
| Example 6 | 100.0 | 96.8 | 89.6 | 84.7 | 81.7 | 79.2 | 76.3 | 72.9 | 68.3 |

Referring to Tables 3 and 4, in Example where the content of natural graphite was less than the content of artificial graphite in the first lower anode active material layer, the adhesive force between the first lower anode active material layer and the anode current collector was degraded compared to those from other Examples.

In Examples 5 and 6 where the content of natural graphite was greater than the content of artificial graphite in each of the first upper anode active material layer and the second anode active material layer, the high-rate charging properties were degraded compared to those from other Examples.

[Evaluation Example 3] Evaluation on battery characteristics according to a thickness ratio of the first lower anode active material layer and the first upper anode active material layer

(1) Examples 7 to 10

An anode and a half-cell were prepared by the same method as that in Example 1, except that a thickness ratio of the first lower anode active material layer (first lower layer) and the first upper anode active material layer (first upper layer) was modified as shown in Table 5 below.

(2) Evaluation method

1) Evaluation on adhesion between the anode current collector and the anode active material layer

Adhesive forces of the anodes of Example 1 and Examples 7-10 were measured by the same method as that in (2)1) of Evaluation Example 2.

2) Evaluation of anode volume expansion rate and detachment

Volume expansion ratios and detachments of the anodes prepared in Examples 1 and 7 to 10 were evaluated by the same method as that in (5)1) of Evaluation Example 1.
The evaluation results are shown in Table 5 below.

[Table 5]

| No. | thickness ratio (%) (first lower layer: first upper layer) | adhesive force (N) | volume expansion ratio (%) | detachment |
|---|---|---|---|---|
| Example 1 | 50:50 | 0.55 | 24.5 | X |
| Example 7 | 10:90 | 0.43 | 23.2 | O |
| Example 8 | 30:70 | 0.49 | 23.6 | O |
| Example 9 | 70:30 | 0.56 | 25.1 | X |
| Example 10 | 90:10 | 0.61 | 25.9 | X |

Referring to Table 5, in Example 1 where the thickness of the first lower anode active material layer was greater than 30% and less than 70% of a total thickness of the first anode active material layer, the volume expansion ratio was reduced and the detachment did not occur when being fully charged.
In Examples 7 and 8 where the thickness of the first lower anode active material layer was 30% or less of the total thickness of the first anode active material layer, the adhesive force was reduced compared to other Examples, resulting in the electrode detachment.
In Examples 9 and 10 where the thickness of the first lower anode active material layer was 70% or more of the total thickness of the first anode active material layer, the lower adhesive force was improved, but the volume expansion ratio was increased compared to other Examples.

[Evaluation Example 41 Evaluation on battery properties according to thickness ratio of the second anode active material layer

(1) Examples 11 to 14

An anode and a lithium secondary battery were manufactured by the same method as that in Example 1, except that the thickness of the second anode active material layer relative to the total thickness of the first anode active material layer and the second anode active material layer was modified as shown in Table 6 below

(2) Evaluation method

1) Evaluation on energy density

The lithium secondary batteries prepared in Examples 1 and 11 to 14 were charged (CC/CV 0.3C 4.2V 0.05C CUT-OFF) and discharged (CC 0.3C 2.5V CUT-OFF) to measure a discharge capacity (Ah) and an energy (Wh).
A volume-energy density was calculated by measuring a volume of each battery in a charged state of 4.2 V.

2) Evaluation on rapid charge life-span properties

The rapid charge life-span properties of the secondary batteries according to Example 1 and Examples 11 to 14 after 100 cycles were evaluated by the same method as that in (5)3) of Evaluation Example 1.
The evaluation results are shown in Table 6 below.

[Table 6]

| No. | thickness of second anode active material layer (%) | volume-energy density (Wh/L) | rapid charge capacity retention (100cycles, %) |
|---|---|---|---|
| Example 1 | 50 | 710 | 98.35 |
| Example 11 | 10 | 712 | 98.30 |
| Example 12 | 30 | 711 | 98.25 |
| Example 13 | 0.3 | 714 | 97.05 |
| Example 14 | 55 | 698 | 98.50 |

Referring to Table 6, in Examples 1, 11 and 12 where the thickness of the second anode active material layer was 0.5% to 50% of the total thickness of the anode active material layer, the side reaction of the electrolyte was suppressed and the life-span properties were improved while achieving enhanced energy density.
In Example 13 where the thickness of the second anode active material layer was less than 0.5%, the first anode active material layer was not sufficiently protected and the relatively low capacity retention ration was provided.
In Example 14, the thickness of the second anode active material layer exceeded 50%, and the energy density was relatively degraded.

[Evaluation Example 5] Evaluation on battery properties according to silicon-based compound content

(1) Examples 15 to 19

An anode, a half-cell and a lithium secondary battery were prepared by the same method as that in Example 1, except that an amount of the silicon-based active material included in the first lower anode active material layer relative to the total weight of the first lower anode active material layer, and an amount of the silicon-based active material included in the first upper anode active material layer relative to the total weight of the first upper anode active material layer were modified as shown in Table 7.

(2) Evaluation method

1) Evaluation on volume expansion ratio

A volume expansion ratio of each anode prepared in Example 1 and Examples 15 to 19 was measured by the same method as that in (5)1) of Evaluation Example 1.

2) Evaluation on energy density

Energy densities of the lithium secondary batteries prepared in Example 1 and Examples 15 to 19 were measured by the same method as that in (2)1) of Evaluation Example 4.

3) Evaluation on rapid charge life-span property

Rapid charge life-span properties of the lithium secondary batteries according to Examples 1 and Examples 15 to 19 after 100 cycles were evaluated by the same method as that in (5)3) of Evaluation Example 1.

4) Evaluation on general charge life-span property

General charge life-span properties in a range of DOD94 (SOC2-96) were evaluated for the lithium secondary batteries prepared in Examples 1 and Examples 15 to 19 were evaluated in a chamber maintained at 35 °C. Under constant current/constant voltage (CC/CV) conditions, the batteries were charged at 0.3C to a voltage corresponding to SOC96, and then cut off at 0.05C. Thereafter, the batteries were discharged at 0.3C to a voltage corresponding to SOC2 under a constant current (CC) condition, and the discharge capacity was measured. The above-described charge/discharge was repeated for 500 cycles, and a discharge capacity retention ratio of (general) charge life-span property evaluation was measured.

The measured results are shown in Table 7 below.

[Table 7]

| No. | content of silicon-based active material (wt%) | | volume expansion ratio (%) | volume-energy density (Wh/L) | rapid charge capacity retention (100cycles, % ) | general charge capacity retention (500cycles, %) |
| --- | --- | --- | --- | --- | --- | --- |
| | first lower anode active material layer | first upper anode active material layer | | | | |
| Example 1 | 9.0 | 9.0 | 24.5 | 710 | 98.35 | 93.3 |
| Example 15 | 6.0 | 6.0 | 22.7 | 702 | 98.50 | 93.0 |
| Example 16 | 30.0 | 30.0 | 32.3 | 730 | 97.63 | 92.5 |
| Example 17 | 35.0 | 35.0 | 35.5 | 735 | 97.47 | 92.5 |
| Example 18 | 40.0 | 40.0 | 44.1 | 738 | 94.50 | 92.2 |
| Example 19 | 0.05 | 0.05 | 13.4 | 691 | 98.53 | 93.4 |

Referring to Table 7, in the lithium secondary batteries of Example 1 and Examples 15 to 17, the enhanced volume expansion, energy density and capacity retention ratio were achieved. Generally, as the content of the silicon-based active material became greater, the volume expansion ratio and the energy density were increased, and the capacity retention was decreased.

In Example 18, the content of the silicon-based active material exceeded 35 wt%, and the volume expansion ratio was relatively increased and the capacity retention ratio was relatively decreased.

In Example 19, the content of the silicon-based active material was less than 0.1 wt%, and the energy density was relatively lowered.

[Evaluation Example 61 Measurement of pore size and crystallite size of porous structure

(1) Examples 20 and 21

An anode, a half-cell and a lithium secondary battery were prepared by the same method as that in Example 1, except that porous structures having pore sizes and crystallite sizes shown in Table 8 below by adjusting the temperature and the stirring time during the synthesis of the resol oligomer, and the firing temperature in the carbonization and activation.

(2) Evaluation method

1) Measurement of pore size of carbon-based particles

The pore size of the carbon-based particles prepared according to Examples 1, 20 and 21 was measured using a Micromeritics Surface area analyzer (ASAP-2420). Specifically, a position of a maximum peak of a Barrett-Joyner-Halenda (BJH) pore size distribution curve obtained from a nitrogen gas sorption isotherm of samples obtained from Examples 1, 20 and 21 was measured to measure the pore size of the carbon-based particles.

2) Measurement of amorphousness and crystallite size of silicon particles included in silicon-containing coating

For the porous structures prepared according to Examples 1, 20 and 21, the crystallite size was calculated using the XRD analysis and Equation 1 described above.
When the silicon particle size was excessively small and was not capable of being measured through the XRD analysis, the particles were determined marked as amorphous.
The measured results are shown in Table 9 below.
Specific XRD analysis equipment/conditions are as described in Table 8 below.

[Table 8]

| XRD(X-Ray Diffractometer) EMPYREAN | |
| --- | --- |
| Maker | PANalytical |
| Anode material | Cu |
| K-Alpha1 wavelength | 1.540598 Å |
| Generator voltage | 45 kV |
| Tube current | 40 mA |
| Scan Range | 10~120° |
| Scan Step Size | 0.0065° |
| Divergence slit | 1/4° |
| Antiscatter slit | 1/2° |

3) Measurement of volume expansion ratio relative to capacity

The anode and the half-cell prepared according to Examples 1, 20 and 21 were charged (CC/CV 0.1C 0.01V (vs. Li) 0.01C CUT-OFF) at room temperature (25°C). An increasement of the anode volume after the charging relative to an initial anode volume was calculated as a percentage, and then divided by a charging capacity to evaluate an volume expansion ratio.

4) Evaluation of rapid charge life-span property

The rapid charge life-span property of the secondary batteries according to Examples 1, 20 and 21 after 100 cycles were evaluated by the same method as that in (5)3) of Evaluation Example 1.
The evaluation results are shown in Table 9.

[Table 9]

| No. | pore size (nm) | crystallite size (nm) | volume expansion (%) /capacity (mAh/g) | rapid charge capacity retention (100 cycles, %) |
| --- | --- | --- | --- | --- |
| Example 1 | 9.5 | amorphous | 3.2 | 98.35 |
| Example 20 | 20.5 | 6 | 5.8 | 95.2 |
| Example 21 | 13 | 7.5 | 4.3 | 94.5 |

Referring to Table 9, in Example 1 where silicon was deposited on the carbon-based particles having pores of a size of 20 nm or less to have an amorphous structure or the crystallite size of 7 nm or less, the low volume expansion ratio and enhanced capacity retention were achieved.

In Example 20, the side reaction of the silicon particles and the electrolyte was increased due to the pore size exceeding 20 nm, and the volume expansion ratio was relatively increased and the capacity retention was relatively degraded.

In Example 21 having the crystallite size of more than 7 nm, mechanical stability of the porous structure during the pressing or the repeated charging and discharging was relatively degraded. Accordingly, the capacity retention of the lithium secondary battery was relatively reduced.

[Evaluation Example 71 Battery properties according to content of porous structure

(1) Examples 22 to 26

An anode, a half battery and a lithium secondary battery were prepared by the same method as that in Example 1, except that the content of the porous structure based on the total weight of the second anode active material layer was modified as shown in Table 10 below.

(2) Evaluation method

1) Evaluation on volume expansion ratio

Volume expansion ratios of the anodes prepared in Example 1 and Examples 22 to 26 were measured by the same method as that in (5)1) of Evaluation Example 1.

2) Evaluation on energy density

Energy densities of the lithium secondary batteries prepared in Example 1 and Examples 22 to 26 were measured by the same method as that in (2)1) of Evaluation Example 4.

3) Evaluation on rapid charge life-span property

Rapid charge life-span properties of the secondary batteries according to Example 1 and Examples 22 to 26 after 100 cycles were evaluated by the same method as that in (5)3) of Evaluation Example 1.

4) Evaluation on general charge life-span property

Rapid charge life-span properties of the secondary batteries according to Example 1 and Examples 22 to 26 after 100 cycles were evaluated by the same method as that in (2) 4) of Evaluation Example 5.

[Table 10]

| No. | porous structure content (wt%) | volume expansion ratio (%) | volume-energy density (Wh/L) | rapid charge capacity retention (100cycles, %) | general charge capacity retention (500 cycles, %) |
|---|---|---|---|---|---|
| Example 1 | 9.0 | 24.5 | 710 | 98.35 | 93.3 |
| Example 22 | 6.0 | 20.7 | 701 | 98.52 | 92.8 |
| Example 23 | 30.0 | 30.5 | 728 | 97.80 | 92.6 |
| Example 24 | 35.0 | 31.2 | 732 | 97.64 | 92.6 |
| Example 25 | 40.0 | 36.0 | 741 | 95.52 | 92.1 |

(continued)

| No. | porous structure content (wt%) | volume expansion ratio (%) | volume-energy density (Wh/L) | rapid charge capacity retention (100cycles, %) | general charge capacity retention (500 cycles, %) |
|---|---|---|---|---|---|
| Example 26 | 0.05 | 12.7 | 690 | 98.50 | 93.5 |

Referring to Table 10, the lithium secondary batteries of Example 1 and Examples 22 to 24 provided improved volume expansion rate, energy density, and capacity retention ratio. Generally, as the content of the porous structure became increased, the volume expansion ratio and the energy density also increased, and the capacity retention ratio was decreased. However, the pores of the carbon-based particles suppressed the volume expansion of the silicon particles, and thus the volume expansion ratio according to the content of the porous structure was lower than the volume expansion ratio according to the content of the silicon-based active material.

In Example 25, the content of the porous structure exceeded 35 wt%, and the volume expansion ratio was relatively increased and the capacity retention was relatively decreased.

In Example 26, the content of the porous structure was less than 0.1 wt%, and the energy density was relatively reduced.

According to exemplary embodiments of the present invention, the compositions and materials of the first lower anode active material layer, the first upper anode active material layer and the second anode active material layer may be adjusted according to the above-described conditions to improve mechanical stability, power and life-span of the lithium secondary battery.

**Claims**

1.  An anode for a lithium secondary battery, comprising:

    an anode current collector;
    a first anode active material layer formed on at least one surface of the anode current collector, the first anode active material layer comprising a silicon-based active material and a graphite-based active material; and
    a second anode active material layer formed on the first anode active material layer, the second anode active material layer comprising a porous structure as an active material,
    wherein the porous structure comprises carbon-based particles including pores, and a silicon-containing coating formed at an inside of the pores of the carbon-based particles or on the surface of the carbon-based particles.

2.  The anode for a lithium secondary battery according to claim 1, wherein the first anode active material layer comprises a first lower anode active material layer in contact with the anode current collector and a first upper anode active material layer formed on the first lower anode active material layer.

3.  The anode for a lithium secondary battery according to claim 2, wherein a content of the silicon-based active material included in the first lower anode active material layer is in a range from 0.1 wt% to 35 wt% based on a total weight of the first lower anode active material layer, and
    a content of the silicon-based active material included in the first upper anode active material layer is in a range from 0.1 wt% to 35 wt% based on a total weight of the first upper anode active material layer.

4.  The anode for a lithium secondary battery according to claim 2 or 3, wherein the graphite-based active material comprises artificial graphite and natural graphite,

    an amount of natural graphite included in the first lower anode active material layer is greater than or equal to an amount of artificial graphite included in the first lower anode active material layer, and
    an amount of natural graphite included in the first upper anode active material layer is less than an amount of artificial graphite included in the first upper anode active material layer.

5.  The anode for a lithium secondary battery according to claim 4, wherein a weight ratio of natural graphite included in the first lower anode active material layer relative to artificial graphite included in the first lower anode active material layer is in a range from 1 to 19.

**6.** The anode for a lithium secondary battery according to claim 4 or 5, wherein a weight ratio of natural graphite included in the first upper anode active material layer relative to artificial graphite included in the first upper anode active material layer is in a range from 0.025 to 0.82.

**7.** The anode for a lithium secondary battery according to one of claims 2 to 6, wherein a thickness of the first lower anode active material layer is greater than 30% and less than 70% of a total thickness of the first anode active material layer.

**8.** The anode for a lithium secondary battery according to any one of claims 1 to 7, wherein the second anode active material layer further comprises artificial graphite and natural graphite, and
an amount of natural graphite included in the second anode active material layer is equal to or less than an amount content of artificial graphite included in the second anode active material layer.

**9.** The anode for a lithium secondary battery according to claim 8, wherein a weight ratio of natural graphite included in the second anode active material layer relative to artificial graphite included in the second anode active material layer is in a range from 0.025 to 1.

**10.** The anode for a lithium secondary battery according to any one of claims 1 to 9, wherein a content of the porous structure is in a range from 0.1 wt% to 35 wt% based on a total weight of the second anode active material layer.

**11.** The anode for a lithium secondary battery according to any one of claims 1 to 10, wherein a thickness of the second anode active material layer is in a range from 0.5% to 50% of a total thickness of the first anode active material layer and the second anode active material layer.

**12.** The anode for a lithium secondary battery according to any one of claims 1 to 11, wherein the carbon-based particles included in the porous structure include at least one selected from the group consisting of activated carbon, a carbon nanotube, a carbon nanowire, graphene, a carbon fiber, a carbon black, graphite, a porous carbon, a pyrolyzed material of cryogel, a pyrolyzed material of xerogel and a pyrolyzed material of aerogel.

**13.** The anode for a lithium secondary battery according to any one of claims 1 to 12, wherein a size of the pores of the carbon-based particles is 20 nm or less.

**14.** The anode for a lithium secondary battery according to any one of claims 1 to 13, wherein silicon included in the silicon-containing coating has an amorphous structure or a crystallite size of 7 nm or less measured by an XRD (X-ray diffraction) analysis,

optionally wherein the crystallite size of silicon included in the silicon-containing coating is measured by Equation 1:

$$[\text{Equation 1}]$$
$$L = \frac{0.9\lambda}{\beta cos\theta}$$

wherein, in Equation 1, L is a crystallite size (nm), $\lambda$ is an X-ray wavelength (nm), $\beta$ is a full width at half maximum (rad) of a peak of a (111) plane of silicon included in the silicon-containing coating, and $\theta$ is a diffraction angle (rad).

**15.** A lithium secondary battery, comprising:

The anode of any one of claims 1 to 14; and
a cathode facing the anode.

# FIG. 1

100

- 130
- 120
- 110

# FIG. 2

100

- 130
- 124 ⎤
- 122 ⎦ 120
- 110

# FIG. 3

# FIG. 4

Europäisches
Patentamt

European
Patent Office

Office européen
des brevets

## EUROPEAN SEARCH REPORT

**Application Number**

EP 22 21 6473

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2021/234191 A1 (LEE YONG SEOK [KR] ET AL) 29 July 2021 (2021-07-29) | 1-6, 8-10, 12-15 | INV.<br>H01M4/04<br>H01M4/133 |
| Y | * claims 1-5,9,10 *<br>* paragraph [0057] *<br>----- | 7,11 | H01M4/134<br>H01M4/36<br>H01M4/38 |
| Y | US 2021/391570 A1 (HAN JUN HEE [KR] ET AL) 16 December 2021 (2021-12-16)<br>* claims 6,9 *<br>* paragraph [0016] *<br>----- | 7,11 | H01M4/525<br>H01M4/583<br>H01M4/66<br>H01M10/052<br>H01M10/0585<br>H01M50/105<br>H01M4/02 |

**TECHNICAL FIELDS SEARCHED (IPC)**

H01M

The present search report has been drawn up for all claims

| Place of search | Date of completion of the search | Examiner |
|---|---|---|
| Munich | 4 May 2023 | Galbiati, Ivano |

EPO FORM 1503 03.82 (P04C01)

## ANNEX TO THE EUROPEAN SEARCH REPORT
## ON EUROPEAN PATENT APPLICATION NO.

EP 22 21 6473

This annex lists the patent family members relating to the patent documents cited in the above-mentioned European search report.
The members are as contained in the European Patent Office EDP file on
The European Patent Office is in no way liable for these particulars which are merely given for the purpose of information.

04-05-2023

| Patent document cited in search report | | Publication date | Patent family member(s) | | Publication date |
|---|---|---|---|---|---|
| US 2021234191 | A1 | 29-07-2021 | CN | 113193225 A | 30-07-2021 |
| | | | KR | 20210096814 A | 06-08-2021 |
| | | | US | 2021234191 A1 | 29-07-2021 |
| US 2021391570 | A1 | 16-12-2021 | CN | 113809283 A | 17-12-2021 |
| | | | KR | 20210155609 A | 23-12-2021 |
| | | | US | 2021391570 A1 | 16-12-2021 |

EPO FORM P0459

For more details about this annex : see Official Journal of the European Patent Office, No. 12/82

**EP 4 207 336 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 101591698